# EUROPÄISCHE PATENTANMELDUNG

(11) **EP 1 754 923 A1**
(43) Veröffentlichungstag der Anmeldung: **21.02.2007**
(21) Anmeldenummer: 06015666.8
(22) Anmeldetag: 27.07.2006
(51) Int. Cl.: F16L 47/02, B29C 70/76

(54) **Kunststoffleitung**

(30) Priorität: 20.08.2005 DE 102005039386
(71) Anmelder: LuK Lamellen und Kupplungsbau Beteiligungs KG, 77815 Bühl (DE)
(72) Erfinder: Rammhofer, Thomas, 77880 Sasbach (DE); Welter, Roland, Dr., 77815 Bühl (DE)

(57) **Zusammenfassung**

Kunststoffleitung (2), dadurch gekennzeichnet, dass die Kunststoffleitung (2) und/oder ein Hydraulik-Winkelstecker (6) und/oder das Kunststoffgehäuse des Hydraulikelements aus einem für Laserstrahlen transparenten Kunststoff gebildet sind/ist.

## Beschreibung

Die Erfindung betrifft eine Kunststoffleitung, insbesondere eine Kunststoffkupplungsleitung.

Es ist bekannt, Verbindungselemente an Kunststoffleitungen anzuspritzen. Allerdings sind die Hersteller von Kunststoffleitungen oft nicht in der Lage, komplizierte Spritzgießteile an die Kunststoffleitungen anzuspritzen. Darüber hinaus ist es, zum Beispiel aus der deutschen Offenlegungsschrift DE 199 27 431 A1, bekannt, einfache Stecker an eine Kunststoffleitung anzuschweißen.

Aufgabe der Erfindung ist es, eine Kunststoffleitung, insbesondere eine Kunststoffkupplungsleitung, zu schaffen, die kostengünstig herstellbar und vielfältig einsetzbar ist.

Die Aufgabe ist bei einer Kunststoffleitung, insbesondere einer Kunststoffkupplungsleitung, dadurch gelöst, dass ein Hydraulik-Winkelstecker an ein Ende der Kunststoffleitung angeschweißt ist. Die aus der deutschen Offenlegungsschrift DE 199 27 431 A1 bekannten Stecker erstrecken sich in Verlängerung der Kunststoffleitung. Der erfindungsgemäße Hydraulik-Wnkelstecker liefert den Vorteil, dass aufwendige Biegungen in der Kunststoffleitung entfallen können.

Ein bevorzugtes Ausführungsbeispiel der Kunststoffleitung ist dadurch gekennzeichnet, dass der Hydraulik-Winkelstecker mit einem O-Ring aus einem selbst schmierenden Werkstoff ausgestattet ist. Dadurch können zusätzliche Montagemedien, wie Fluide oder Fette, entfallen.

Die oben angegebene Aufgabe ist bei einer Kunststoffleitung, insbesondere einer Kunststoffkupplungsleitung, auch dadurch gelöst, dass ein Kunststoffgehäuse eines Hydraulikelements direkt an ein Ende der Kunststoffleitung angeschweißt ist. Durch die stoffschlüssige Verbindung zwischen der Kunststoffleitung und dem Kunststoffgehäuse des Hydraulikelements können zusätzliche Verbindungselemente, wie Steckverbindungselemente, entfallen.

Die oben angegebene Aufgabe ist bei einer Kunststoffleitung, insbesondere einer Kunststoffkupplungsleitung, auch dadurch gelöst, dass ein Kunststoffgehäuse eines Hydraulikelements direkt in die Kunststoffleitung eingeschweißt ist. Die Kunststoffleitung wird durch das Kunststoffgehäuse unterbrochen, das direkt, ohne zusätzliche Verbindungselemente, wie Steckverbindungselemente, an zwei Enden der Kunststoffleitung angeschweißt ist.

Ein weiteres bevorzugtes Ausführungsbeispiel der Kunststoffleitung ist dadurch gekennzeichnet, dass das Hydraulikelement einen Konnektor, einen Spitzenmomentbegrenzer, einen Kribbelfilter, einen Dämpfer und/oder einen Entlüfter umfasst. Die stoffschlüssige Verbindung zwischen der Kunststoffleitung und dem Kunststoffgehäuse liefert den Vorteil, dass zusätzliche Verbindungselemente, wie Steckverbindungselemente, entfallen können.

Ein weiteres bevorzugtes Ausführungsbeispiel der Kunststoffleitung ist dadurch gekennzeichnet, dass die Kunststoffleitung und der Hydraulik-Winkelstecker und/oder das Kunststoffgehäuse des Hydraulikelements aus dem gleichen Kunststoffmaterial gebildet sind. Vorzugsweise sind die Kunststoffleitung und der Hydraulik-Wnkelstecker und/oder das Kunststoffgehäuse des Hydraulikelements aus Polyamid, insbesondere aus Polyamid 612, gebildet. Das Kunststoffgehäuse ist vorzugsweise mit Glasfasern verstärkt.

Ein weiteres bevorzugtes Ausführungsbeispiel der Kunststoffleitung ist dadurch gekennzeichnet, dass die Kunststoffleitung und/oder der Hydraulik-Winkelstecker und/oder das Kunststoffgehäuse des Hydraulikelements aus einem für Laserstrahlen transparenten Kunststoff gebildet sind/ist. Dadurch wird die Anwendung von bekannten Laserschweißverfahren vereinfacht.

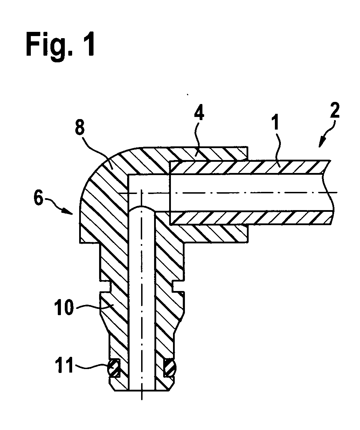

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.

In der beiliegenden Figur ist ein Ende einer erfindungsgemäßen Kunststoffleitung im Längsschnitt dargestellt.

Die beiliegende Figur zeigt ein Ende 1 einer erfindungsgemäßen Kunststoffleitung 2 im Längsschnitt. An das Ende 1 der Kunststoffleitung 2 ist ein Anschlussstutzen 4 eines Hydraulik-Winkelsteckers 6 angeschweißt. Der Hydraulik-Winkelstecker 6 umfasst ein Hydraulik-Winkelsteckergehäuse 8, das aus dem gleichen Kunststoffmaterial wie die Kunststoffleitung 2 gebildet ist. Bei dem Kunststoffmaterial handelt es sich um Polyamid PA 612. Der Anschlussstutzen 4 des Hydraulik-Winkelsteckers 6 ist mittels Laserstrahlschweißung an das Ende 1 der Kunststoffleitung 2 angeschweißt. Zu diesem Zweck ist das Kunststoffmaterial der Kunststoffleitung 2 und des Hydraulik-Winkelsteckers 6 für Laserstrahlen transparent ausgebildet.

Der Hydraulik-Winkelstecker 6 weist ein Steckverbindungselement 10 auf, das einstückig mit dem Steckergehäuse 8 ausgebildet und in einem rechten Winkel zu dem Anschlussstutzen 4 angeordnet ist. An dem freien Ende des Steckverbindungselements 10 ist ein O-Ring 11 einer Ringnut aufgenommen.

Gemäß einem Aspekt der vorliegenden Erfindung wird eine stoffschlüssige Verbindung zwischen dem Steckergehäuse 8 des Hydraulikwinkelsteckers 6 mit dem freien Ende 1 der Kunststoffleitung 2 geschaffen. Gemäß einem weiteren Aspekt der vorliegenden Erfindung wird eine stoffschlüssige Verbindung eines Kunststoffgehäuses eines Konnektors, eines Spitzenmomentbegrenzers, eines Kribbelfilters, eines Dämpfers oder eines Entlüfters in oder an einem Kunststoffleitungsrohr geschaffen. Die stoffschlüssige Verbindung wird vorzugsweise durch einen Schweißprozess, zum Beispiel durch Laser-, Reib-, Rotations- oder Ultraschallschweißen hergestellt. Die Hydraulikelemente können auch innerhalb der Leitung angebracht sein.

Die vorliegende Erfindung liefert den Vorteil, dass zusätzliche Verbindungs-/Sicherungs- und Dichtelemente entfallen können. Darüber hinaus wird eine kompakte kostengünstige Bauweise ermöglicht. Durch die stoffschlüssige Verbindung wird eine verdrehsichere und hochfeste Verbindung geschaffen.

Zur Vereinfachung der Montage werden O-Ringe aus oder mit einem selbst schmierenden Werkstoff verwendet. Dadurch können zusätzliche Montagemedien, wie Fluide oder Fette, entfallen. Daraus resultiert auch eine effektivere Prüfmöglichkeit. Montagemedien können Feinlecks verdecken und später abdampfen, was zu Problemen führen kann.

### Bezugszeichenliste

- 1.: Ende
- 2.: Kunststoffleitung
- 4.: Anschlussstutzen
- 6.: Hydraulik-Winkelstecker
- 8.: Steckergehäuse
- 10.: Steckverbindungselement
- 11.: O-Ring

## Patentansprüche

1. Kunststoffleitung, insbesondere Kunststoffkupplungsleitung, **dadurch gekennzeichnet, dass** ein Hydraulik-Winkelstecker (6) an ein Ende (1) der Kunststoffleitung (2) angeschweißt ist.

2. Kunststoffleitung nach Anspruch 1, **dadurch gekennzeichnet, dass** der Hydraulik-Winkelstecker (6) mit einem O-Ring (11) aus einem selbst schmierenden Werkstoff ausgestattet ist.

3. Kunststoffleitung, insbesondere Kunststoffkupplungsleitung, insbesondere nach einem der vorhergehenden Ansprüche, **dadurch gekennzeichnet, dass** ein Kunststoffgehäuse eines Hydraulikelements direkt an ein Ende der Kunststoffleitung angeschweißt ist.

4. Kunststoffleitung, insbesondere Kunststoffkupplungsleitung, insbesondere nach einem der vorhergehenden Ansprüche, **dadurch gekennzeichnet, dass** ein Kunststoffgehäuse eines Hydraulikelements direkt in die Kunststoffleitung eingeschweißt ist.

5. Kunststoffleitung nach Anspruch 3 oder 4, **dadurch gekennzeichnet, dass** das Hydraulikelement einen Konnektor, einen Spitzenmomentbegrenzer, einen Kribbelfilter, einen Dämpfer und/oder einen Entlüfter umfasst.

6. Kunststoffleitung nach einem der vorhergehenden Ansprüche, **dadurch gekennzeichnet, dass** die Kunststoffleitung (2) und der Hydraulik-Winkelstecker (6) und/oder das Kunststoffgehäuse des Hydraulikelements aus dem gleichen Kunststoffmaterial gebildet sind.
